# EUROPÄISCHE PATENTSCHRIFT

(11) **EP 1 516 231 B1**
(45) Veröffentlichungstag und Bekanntmachung des Hinweises auf die Patenterteilung: **28.12.2005**
(21) Anmeldenummer: 03761478.1
(22) Anmeldetag: 20.06.2003
(51) Int. Cl.: G05B 19/042

(54) **VERFAHREN UND VORRICHTUNG ZUM KONFIGURIEREN DER STEUERUNG EINES FADENVERARBEITENDEN SYSTEMS**
METHOD AND DEVICE FOR CONFIGURING THE CONTROL UNIT OF A YARN PROCESSING SYSTEM
PROCEDE ET DISPOSITIF POUR CONFIGURER LA COMMANDE D'UN SYSTEME DE FACONNAGE DE FILS

(30) Priorität: 26.06.2002 DE 10228516
(43) Veröffentlichungstag der Anmeldung: 23.03.2005
(73) Patentinhaber: IROPA AG, 6341 Baar (CH)
(72) Erfinder: HELLSTRÖM, Jerker, S-440 41 Nol (SE)
(74) Vertreter: Grünecker, Kinkeldey, Stockmair & Schwanhäusser Anwaltssozietät
(86) Internationale Anmeldenummer: PCT/EP2003/006508
(87) Internationale Veröffentlichungsnummer: WO 2004/003670

(56) Entgegenhaltungen:
- WO-A-00/49474
- WO-A-01/31410
- WO-A-99/14643
- DE-A- 4 214 644
- DE-A- 19 923 047
- US-A- 4 574 353

## Beschreibung

Die Erfindung betrifft eine Vorrichtung der im Oberbegriff des Anspruchs 1 angegebenen Art sowie ein Verfahren der im Oberbegriff des Anspruchs 20 angegebenen Art.

WO 99/14643 offenbart eine Vorrichtung, bei der in der Initialisierungsphase des fadenverarbeitenden Systems die Adressierung der Fadenliefergeräte im Kommunikations-Bussystem über eine unidirektionale Leitungsschleife von und zur Hauptsteuerung der Webmaschine durch die Hauptsteuerung selbst erfolgt. In jedem Fadenliefergerät ist in der Leitungsschleife ein Schalter enthalten, der über die Liefergeräte-Steuerung durch einen in dem Bussystem übertragenen Befehl geschlossen wird, sobald in der Leitungsschleife ein Adressier-Diagramm aus der Hauptsteuerung übertragen und verifiziert wurde. Die Schalter werden aufeinanderfolgend geschlossen, bis jedes Fadenliefergerät seine individuelle Adresse im Kommunikations-Bussystem erhalten hat. Dies erfordert einen erheblichen Verkabelungsaufwand. Außerdem muss die Hauptsteuerung, die ohnedies eine Vielzahl hochwertiger Aufgaben zu erfüllen hat, für die Adressierung erweitert sein.

Ferner ist es aus der Praxis bei fadenverarbeitenden Systemen bekannt, die Adressierung der Fadenliefergeräte mit den erforderlichen Knoten-Adressen mit analogen Spannungssignalen durchzuführen. Da für jedes analoge Spannungssignal ein definierter Spannungsbereich freigehalten werden muss, der gesamte Spannungsbereich jedoch systembedingt begrenzt ist, ist die Adressen-Anzahl relativ klein. Dies stellt für Systeme mit einer erheblichen Anzahl von Fadenliefergeräten einen Nachteil dar. Außerdem ist eine aufwendige Spannungsteiler-Schaltung nötig.

Der Erfindung liegt die Aufgabe zugrunde, eine Vorrichtung und ein Verfahren der eingangs genannten Art zu schaffen, mit denen auf kostengünstige Weise und mit reduziertem Verkabelungsaufwand eine zuverlässige Adressierung auch einer großen Anzahl von Fadenliefergeräten möglich ist, wobei das fadenverarbeitende System jederzeit um weitere Fadenliefergeräte zu erweitern oder verkleinem sein soll bzw. Fadenliefergeräte problemlos umsetzbar sein sollen.

Die gestellte Aufgabe wird mit den Merkmalen des Anspruchs 1 und den Merkmalen des Verfahrensanspruchs 19 gelöst.

Die den Fadenliefergeräten gemeinsame Schnittstelle mit ihrem wenigstens einen Code-Generator lässt sich baulich einfach und kostengünstig auslegen. Die Schnittstelle kann an einer Position angeordnet sein, an der der Verkabelungsaufwand gering bleibt. Besonders zweckmäßig lässt sich nur für die Adressier-Aufgabe ein kostengünstiger einfacher Code-Generator benutzen. Dieser Code-Generator hat eine möglichst große Anzahl an Ausgängen, so dass die Adressiervorrichtung kompakt und zuverlässig ist. Für jedes Fadenliefergerät wird zum Adressieren eine Datenleitung vorgesehen, die beispielsweise im Anschlusskabel des Fadenliefergeräts enthalten sein kann. Dies reduziert den Verkabelungsaufwand erheblich. Außerdem lässt sich diese Datenleitung nach Abschluss der Adressieroperation und/oder falls das betreffende Fadenliefergerät ohnedies im Stand-Alone-Modus arbeitet, gewinnbringend zum Übertragen anderer Signale nutzen, z.B. von Statussignalen des Fadenliefergeräts und/oder Funktionssignalen an angeschlossene Funktionsglieder, weil die Datenleitung im normalen Betrieb des fadenverarbeitenden Systems, d.h. nach einer Initialisierungsphase keine aktive Funktion mehr hat. Ein Vorteil des Code-Generators besteht darin, dass er mittels des seriellen Codes, der in gepulster Form generiert wird, eine nahezu unbeschränkte Anzahl von Fadenliefergeräten problemlos zu adressieren vermag, da sich die individuellen seriellen Codes in ihrem Informationsgehalt eindeutig voneinander unterscheiden lassen, obwohl sie grundsätzlich gleich aufgebaut sind. Günstig ist schließlich, dass die Schnittstelle mit dem Generator sozusagen ein Bestandteil des Fadenliefergeräte-Pakets ist, d.h. unabhängig von für übergeordnete Aufgaben bestimmten Steuerungs- und Kommunikationseinrichtungen, vorausgesetzt, dass sie damit kompatibel konzipiert ist.

Zweckmäßig wird mit dem nur für das Adressieren eingesetzten Code-Generator an jedem Ausgang ein serieller Code generiert, der zusätzlich zu der individuellen Knoten-Adressen-Information auch eine Kommunikations-Protokoll-Information enthält, die das Fadenliefergerät benutzt, um mit dem jeweils ausgewählten Protokoll zu kommunizieren. Dies erspart es, das Fadenliefergerät vor der Installation auf das jeweilige Protokoll einzustellen bzw. bei einer Protokolländerung Umstellungen am Fadenliefergerät vornehmen zu müssen.

Da es in fadenverarbeitenden Systemen unterschiedliche Typen von Fadenliefergeräten bzw. unterschiedliche Operationsmodii von Fadenliefergeräten gibt, weist die jeweilige Liefergerätsteuerung zweckmäßig einen Mikrocontroller und einen an die Datenleitung angeschlossenen, bidirektionalen I/O-Schaltkreis auf, der vom Mikrocontroller unter Ansprechen auf den Informationsinhalt des seriellen Codes entweder in einem Lesestatus oder Lese/Sendestatus zur Kommunikation haltbar oder in einen Sendestatus umstellbar ist. Arbeitet das Fadenliefergerät nach der Initialisierungsphase im Stand-Alone-Modus autonom, wobei es nur Statussignale an die Textilmaschine zu geben braucht, z.B. ein Fadenbruchsignal, auf das die Textilmaschine mit Abschalten oder Umschalten auf ein anderes Fadenliefergerät reagieren können muss, so wird in dem Sendestatus die an sich zum Adressieren vorgesehene Datenleitung benutzt, um Statussignale, z. B. über die Schnittstelle, an die Textilmaschine übertragen. Dadurch wird in eine getrennte Signalleitung von jedem Fadenliefergerät zur Textilmaschine eingespart. Arbeitet das Fadenliefergerät hingegen im Kommunikations-Modus, dann könnte der I/O-Schaltkreis im Lesestatus bleiben, und wird, falls überhaupt erforderlich, das Statussignal als Nachricht im Bussystem übertragen. Ist der I/O-Schaltkreis zur Kommunikation und Adressierung im Lese/Sendestatus gehalten, dann können Statussignale generell nach der Initialisierungsphase über die Datenleitungen und weiter über eine einzige Signalleitung an die Textilmaschine übertragen werden.

Das Fadenliefergerät bereitet sich mit der Adressierung automatisch auf seinen Operationsmodus vor, z.B. dem Stand-Alone-Operationsmodus, in dem es bei einer nicht lesbaren Information oder bei Ausbleiben einer seriellen Information innerhalb der Initialisierungsphase, beispielsweise mittels Start- und Ende-Indikatoren des seriellen Codes, selbsttätig von dem Lesestatus auf den Sendestatus umschaltet und diesen hält.

Besonders zweckmäßig wird die Schnittstelle mit dem Code-Generator in einem von der Textilmaschine baulich getrennten Stromversorgungskasten der Fadenliefergeräte angeordnet, an den die Fadenliefergeräte ohnedies beispielsweise zur Stromversorgung oder zur Integration in das Bussystem anzuschließen sind. Dies spart Verkabelungsaufwand und trennt die Adressiervorrichtung von den höher qualifizierten Steuerungskomponenten. Es ist allerdings denkbar, die Schnittstelle mit dem Adressier-Code-Generator in der Webmaschine oder der Hauptsteuerung zu platzieren, beispielsweise falls auch der Stromversorgungskasten der Fadenliefergeräte dort angeordnet ist. Zweckmäßig wird die Schnittstelle mit dem Adressier-Code-Generator jedoch dort platziert, wo mit geringem Verkabelungsaufwand ausgekommen wird. Das Paket aus den Fadenliefergeräten, dem Kasten und der Adressiervorrichtung, d.h. eine standardisierte Fadenliefergerät-Plattform, ist vortertigbar und kann aufgrund seiner universellen Ausstattung problemlos mit verschiedenen Textilmaschinentypen und/oder Kommunikationssystemen kombiniert werden.

An der Schnittstelle kann ein erster Typ einer Kommunikations-Schnittstellen-Leiterplatte vorgesehen sein, die an das auch mit der Hauptsteuerung der Textilmaschine verbundene Kommunikations-Bussystem angeschlossen ist. Die einzelnen Knoten für die Fadenliefergeräte sind dann sozusagen in der Schnittstelle platziert.

Alternativ kann an der Schnittstelle ein zweiter Typ einer Schnittstellenleiterplatte für einen Stand-Alone-Modus vorgesehen sein, d.h., dass das angeschlossene Fadenliefergerät nicht mit der Textilmaschine kommuniziert, die von dem Bussystem getrennt arbeitet, sondern ggfs. in ein Bussystem integriert ist, das einige oder alle der Fadenliefergeräte und gegebenenfalls periphere Komponenten verbindet. Dieser zweite Typ der Schnittstellen-Leiterplatte sollte eine Funktionalität besitzen, wie sie normalerweise zur Kommunikation von einer Textilmaschine bereitgestellt wird.

Alternativ kann an der Schnittstelle ein dritter Typ einer Schnittstellen-Leiterplatte für einen Stand-Alone-Modus vorgesehen sein. Die zum Adressieren benutzte Datenleitung wird im normalen Betrieb z.B. zum Übertragen der Statussignale des Fadenliefergeräts über eine von der Schnittstelle zur Hauptsteuerung führende Signalleitung eingesetzt.

Um die Konfiguration der Steuerung zu vereinfachen, weist die Schnittstelle zweckmäßig eine Universal-Leiterplatte auf, die wahlweise als der erste, zweite oder der dritte Typ konfigurierbar ist, und zwar vorzugsweise im Hinblick auf den verwendeten Fadenliefergerätetypus oder Textilmaschinentypus oder Fadenliefergerät-Operationsmodus.

Jede zum Adressieren bzw. zum Einstellen des Modus des Fadenliefergeräts während beispielsweise einer Initialisierungsphase vorgesehene Datenleitung lässt sich gewinnbringend im Normalbetrieb nicht nur zur Übertragung von Statussignalen an die Textilmaschine nutzen, wofür sie z.B. über die Schnittstelle an eine gemeinsame Signalleitung angeschlossen ist, sondern sie kann auch zu einem Funktionsglied, z.B. im oder beim Stromversorgungskasten der Fadenliefergeräte, fortgeführt werden. Durch diese Konfiguration der Datenleitung, eine Datenleitung pro Funktionsglied reicht gegebenenfalls, lässt sich von wenigstens einem Fadenliefergerät oder von der Textilmaschine über das wenigstens eine Fadenliefergerät jedes gewünschte Funktionssignal mit schnellem und genauem Timing übertragen. Solche Funktionsglieder werden im Regelfall Steuervorrichtungen sein, die gegebenenfalls sogar im Bussystem adressierbar sind, und die für niedrige oder mittlere Anforderungen vorgesehen sind, wie wenigstens ein Ventilantrieb für ein Pneumatikventil für Reinigungszwecke. Diese zusätzliche Funktion des fadenverarbeitenden Systems lässt sich, falls erforderlich, dank der Datenleitungs-Konfiguration ohne Mehraufwand im Normalbetrieb bedienen.

Damit die Adressierung ausgehend von der Schnittstelle autonom durchführbar ist, sollte der Code-Generator einen Systemzeitgeber, einen Protokollselektor und einen Basis-Adress-Selektor aufweisen. Der System-Zeitgeber definiert das interne Timing der Adressiervorrichtung beim Adressiervorgang. Der serielle Code kann dann an jedem Ausgang mit einer vorbestimmten Anzahl, beispielsweise während der Initialisierungsphase wiederholt werden, oder getaktet permanent. Der Protokollselektor, falls vorgesehen, definiert die jeweilige Kommunikations-Protokoll-Information, die an das Fadenliefergerät übertragen wird, bzw. trifft die Auswahl des jeweils benutzten Protokolls. Die an einen Code-Generator angeschlossenen Fadenliefergeräte erhalten zweckmäßigerweise dieselbe Protokoll-Information. Der Basis-Adress-Selektor definiert für den Code-Generator eine Basisadresse, mit der der Code-Generator die individuellen Knoten-Adress-Informationen generiert. Der Protokoll-Selektor und der Basis-Adress-Selektor werden zweckmäßig durch einen DIP-Schalter oder mehrere, entsprechend gesetzte Jumper-Schalter gebildet. Bei mehreren, in Serie geschalteten Code-Generatoren kann der Protokoll-Selektor ein gemeinsamer Selektor-Schalter sein.

Sollte die Anzahl der anzuschließenden Fadenliefergeräte so groß sein, dass sie mit einem einzigen Code-Generator nicht abzudecken ist, können z.B., zu einer wahlweisen Expansion, an der Schnittstelle auch mehrere in Serie geschaltete Code-Generatoren vorgesehen werden. Jeder der Code-Generatoren kann einen eigenen Basis-Adress-Selektor aufweisen, so dass sich die Basisadressen der einzelnen Code-Generatoren voneinander unterscheiden.

Alternativ kann bei mehreren in Reihe geschalteten Code-Generatoren ein stromabliegender Generator an einen Ausgang des stromaufliegenden Generators angeschlossen sein und diesen Ausgang als seinen Basis-Adress-Selektor nutzen (Kaskadenschaltung). Dies kann bedeuten, dass der stromabliegende Code-Generator dieselbe Basisadresse wie der stromaufliegende Generator verwendet, oder durch eine interne Programmroutine aus der Basis-Adresse des stromaufliegenden Generators eine eigene, andere Basisadresse ableitet.

Die Schnittstelle, die primär zur Adressierung angeordnet ist, lässt sich gewinnbringend auch in das Bussystem und das Stromversorgungssystem integrieren, wenn die Leiterplatte zusätzlich wenigstens eine Kommunikations-Schnittstelle oder eine Stromversorgungs-Schnittstelle aufweist. Dies verringert ebenfalls den Verkabelungsaufwand.

Zweckmäßig sind die Ausgänge als Fadenliefergerät-Anschlusskonnektoren für jeweils ein Verbindungskabel bzw. einen Anschlusskonnektor eines Verbindungskabels ausgebildet. Das Verbindungskabel enthält die Datenleitung als eine Adressier-Ader. Durch Verbinden der Konnektoren ist jedes Fadenliefergerät sowohl zur Adressierung als auch zur Kommunikation oder für die Stromversorgung angeschlossen. Dies vereinfacht den Verkabelungsaufwand erheblich.

Bei einer alternativen Ausführungsform kann der Code-Generator grundsätzlich zusätzlich einen Eingang für einen seriellen Code und/oder einen Ausgang für einen seriellen Expansionscode aufweisen, für den Fall, dass an der Schnittstelle mehr als ein Code-Generator gebraucht und diese Code-Generatoren funktionell miteinander zu verknüpfen sind.

So kann bei in Serie geschalteten Code-Generatoren jeder stromabliegende Generator mit seinem Code-Eingang an den seriellen Expansionscodeausgang des stromaufliegenden Generators angeschlossen werden, um seine Basisadresse ableiten zu können und seine gegebenenfalls vorab gesetzte Basis-Adressinformation bzw. sogar die Kommunikations-Protokollinformation mittels des übertragenen seriellen Expansionscodes zu überschreiben. Dann lassen sich baugleiche und gleich konfigurierte Generatoren verwenden, die dennoch unterschiedliche Informationen abgeben.

Bei einer anderen Alternative wird bei in Serie geschalteten Code-Generatoren der Code-Eingang des stromabliegenden Generators an einen Ausgang des stromaufliegenden Generators angeschlossen, welcher Ausgang nicht mit einem Fadenliefergerät verbunden wird. Auf diesem Weg lässt sich die Basisadresse des stromaufliegenden Generators ablesen, und lässt sich die interne Kommunikations-Protokoll- und/oder Basis-Adressen-Informationseinstellung des stromabliegenden Generators mittels der vom stromaufliegenden Generator übertragenen individuellen Information überschreiben und adaptieren.

Der zum Adressieren und gegebenenfalls auch zum Auswählen des Kommunikations-Protokolls generierte und übertragene serielle Code ist zweckmäßig in mehrere Datensegmente unterteilt. In einem zweckmäßigen Datenformat kann ein Start-Indikator in Form wenigstens eines low-Start-Bits ein serielles Wort einleiten. Das serielle Wort enthält wenigstens ein binäres Datensegment aus einer Bit-Vielzahl. Vorzugsweise ist ein Datensegment mit der jeweiligen Knotenadressen-Information und ein weiteres Datensegment mit der Kommunikations-Protokoll-Information für den jeweiligen Knoten in dem seriellen Wort enthalten. Das serielle Wort wird abgeschlossen durch einen Ende-Indikator, der ein Bit oder mehrere Bits im invertierten Status des Start-Bits enthalten kann. Mit diesem Aufbau des seriellen Codes lassen sich eindeutig lesbare und verifizierbare Informationen übertragen und lässt sich das Fadenliefergerät darauf aufmerksam machen, dass die Adressierung erfolgt.

Verfahrensgemäß wird, um die Betriebssicherheit beim Adressieren zu erhöhen, der generierte und übertragene serielle Code beim Empfang im Fadenliefergerät mehrfach gesampelt und wird entweder die Knoten-Adressen-Information und/oder die Kommunikations-Protokoll-Information erst dann verifiziert und akzeptiert, nachdem mehrere gleiche Samples des seriellen Codes festgestellt wurden. Dies verringert die Gefahr, dass Rauscheinflüsse oder andere Störungen zu fehlerhafter Adressierung führen könnten. Das konfigurierende serielle Codesignal wird demzufolge erst dann akzeptiert, wenn es als stabil erkannt worden ist.

Anhand der Zeichnung werden Ausführungsformen des Erfindungsgegenstandes erläutert. Es zeigen:
- Fig. 1: schematisch ein fadenverarbeitendes System,
- Fig. 2: schematisch eine andere Ausführungsform eines fadenverarbeitenden Systems,
- Fig. 3: in schematischer Form das Datenformat eines seriellen Codes,
- Fig. 4: diagrammartig einen Code-Generator zur Verdeutlichung der Adressierung von Fadenliefergeräten in dem fadenverarbeitenden System der Fig. 1 oder Fig. 2,
- Fig. 5: eine vergrößerte Darstellung einer Schnittstelle mit einem Code-Generator und Ausgängen zum Anschließen von Fadenliefergeräten,
- Fig. 6: eine Schnittstelle mit zwei in Serie geschalteten Code-Generatoren für eine große Anzahl von Fadenliefergeräten,
- Fig. 7: eine Schnittstelle mit zwei in Serie geschalteten Code-Generatoren für eine große Anzahl von Fadenliefergeräten,
- Fig. 8: eine Schnittstelle mit zwei in Serie geschalteten Code-Generatoren zum Anschließen einer Vielzahl von Fadenliefergeräten, und
- Fig. 9: schematisch Grundkomponenten einer weiteren Ausführungsform eines fadenverarbeitenden Systems.

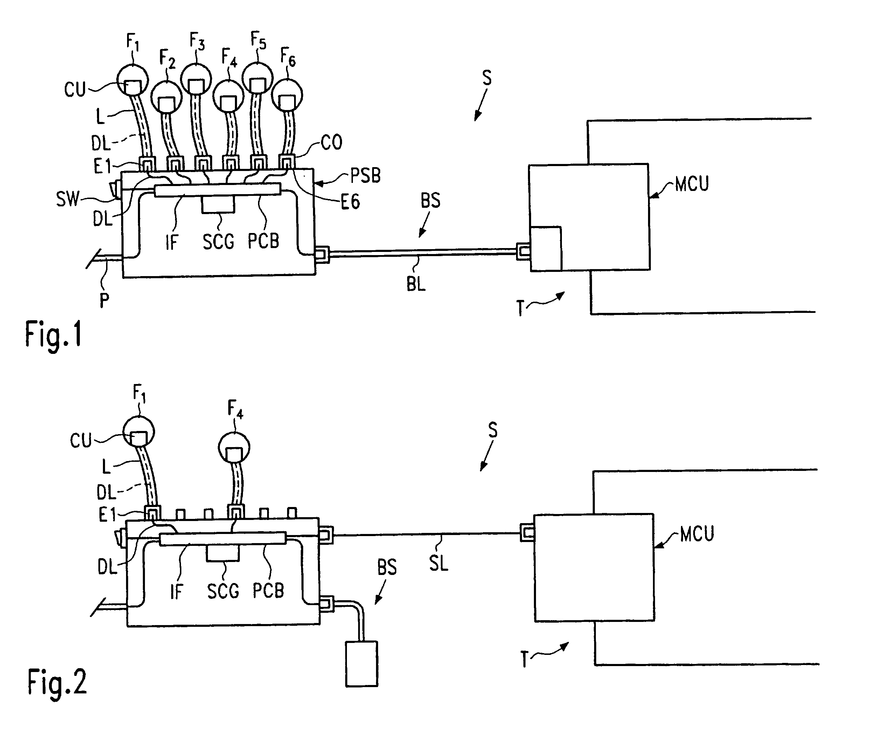

Ein fadenverarbeitendes System S in Fig. 1 umfasst beispielsweise eine Textilmaschine T mit einer computerisierten Hauptsteuerung MCU und mehrere Fadenliefergeräte F1 bis F6, die der Textilmaschine T operativ zugeordnet sind, und von denen die Textilmaschine Fäden nimmt und in verschiedenen Fadenkanälen verarbeitet. Typischerweise ist die Textilmaschine T eine Webmaschine und sind die Fadeliefergeräte F1 bis F6 Schussfaden-Liefergeräte. Alternativ könnte die Textilmaschine z.B. auch eine Strickmaschine mit mehreren Stricksystemen sein, denen die Fadenliefergeräte F1 bis F6 einzeln oder gruppenweise Strickfäden liefern.

Die Fadenliefergeräte F1 bis F6 sind über einzelne Anschlusskabel L an wenigstens einen gemeinsamen Stromversorgungskasten PSB angeschlossen, der an die Hauptstromversorgung P angeschlossen ist. Ferner ist ein Kommunikations-Bussystem BS vorgesehen, in welches die Hauptsteuerung MCU und die Fadenliefergeräte F1 bis F6 eingegliedert sind. Ein Busleiter BL verbindet die Hauptsteuerung MCU mit dem Stromversorgungskasten PSB. Das Bussystem könnte alternativ direkt zu den Fadenliefergeräten geführt sein. Mit einem Schalter SW können die Fadenliefergeräte F1 bis F6 ein- und ausgeschaltet werden. Es ist allerdings denkbar, an den Fadenliefergeräten eigene Schalter vorzusehen, oder einen Hauptschalter für das ganze fadenverarbeitende System zu benutzen, z.B. auch um eine Initialisierungsphase einzuleiten.

In dem Stromversorgungskasten PSB ist eine Schnittstelle IF angeordnet, die beispielsweise eine Schnittstellen-Leiterplatte PCB enthält, der wenigstens ein Code-Generator SCG (Prozess- oder Logikschaltung) zum Generieren eines seriellen, gepulsten Codes zugeordnet ist. Die Schnittstelle IF bzw. die Leiterplatte PCB kann an die Stromversorgung P, das Bussystem BS und gegebenenfalls den Schalter SW angeschlossen sein. In jedem Anschlusskabel L ist eine einzelne Datenleitung DL enthalten, die eine Steuerung CU des Fadenliefergeräts F1 bis F6 mit der Schnittstelle IF verbindet, zweckmäßigerweise über Konnektoren CU (Steckverbinder) an Ausgängen E1 bis E6 der Schnittstelle IF. Die Ausgänge E1 bis E6 können an einer Außenwand des Stromversorgungskastens PSB positioniert sein. Jeder Ausgang E1 bis E6 ist beispielsweise einem vorbestimmten Fadenkanal der Webmaschine zugeordnet.

Die Fadenliefergeräte F1 bis F6 können mit unterschiedlichen Operationsmodii arbeiten. Der erste Typ ist ein Fadenliefergerät, das eine Kommunikation mit der Textilmaschine T in dem Bussystem BS ausführt, beispielsweise ein Schussfadenliefergerät für eine Düsenwebmaschine. Jedes Fadenliefergerät kann auch in einem Stand-Alone-Modus arbeiten, ohne Kommunikation mit der Textilmaschine, sondern allenfalls mit Kommunikation in einem Bussystem BS, in das Fadenliefergeräte eingegliedert sind, jedoch nicht die Textilmaschine (Fig. 2). Jedes Fadenliefergerät könnte auch im Stand-Alone-Modus ganz autonom arbeiten und an keiner Kommunikation teilnehmen.

In dem fadenverarbeitenden System S in Fig. 2 ist ein Kommunikations-Bussystem BS vorgesehen, in welches beispielsweise die Fadenliefergeräte F1, F4 integriert sind, jedoch nicht die Textilmaschine T. Zwischen der Schnittstelle IF und der Hauptsteuerung MCU ist eine Signalleitung SL vorgesehen, um im Betrieb des Systems Statussignale der Fadenliefergeräte an die Textilmaschine zu übertragen, z.B ein Fadenbruchsignal oder Stoppsignal oder dgl. Dieses Signal wird über die Datenleitung DL an die Schnittstelle IF und von der Schnittstelle IF über die Signalleitung SL an die Hauptsteuerung MCU übertragen.

Mindestens drei unterschiedliche Typen an Leiterplatten PCB können zum Einsatz kommen. Dies bedeutet, dass entweder der jeweils zweckmäßige Leiterplatten-Typ an der Schnittstelle IF eingesetzt ist, oder eine Universal-Leiterplatte vorgesehen ist, die in Abstimmung auf die jeweilige Situation entsprechend konfiguriert wird.

Der erste Typ einer Schnittstellen-Leiterplatte PCB dient für Fadenliefergeräte, die mit einer Textilmaschine, z.B. Webmaschine, keine Kommunikation ausführen. An die Textilmaschine können jedoch Statussignale der Fadenliefergeräte übertragen werden, und zwar entweder als separate Signale von jedem Fadenliefergerät zur Textilmaschine (nicht gezeigt) oder auf der Signalleitung SL (Fig. 2).

Der zweite Typ der Leiterplatte PCB dient für Fadenliefergeräte zur Kommunikation mit einer Textilmaschine. Die Fadenliefergeräte sind mit dem gemeinsamen Bussystem verbunden, und zwar über Knoten mit bestimmten Adressen. Statussignale können in Form von Nachrichten in dem Bussystem übertragen werden. Es ist auch möglich, die Statussignale separat auf einer Signalleitung und den Datenleitungen zu übertragen.

Der dritte Typ ist eine Schnittstellen-Leiterplatte PCB für Fadenliefergeräte, die mit einer Textilmaschine nicht kommunizieren, sondern über ein eigenes Bussystem untereinander kommunizieren. In diesem Fall sollte die Schnittstellen-Leiterplatte PCB einen Großteil der Funktionalität haben, die normalerweise durch die Textilmaschine selbst gegeben ist.

Der an der Schnittstelle IF angeordnete Code-Generator SCG kann entweder eine reine Digital-Logikschaltung sein, unter Verwendung einer FPGA, oder kann ein einfacher Mikrocontroller oder -prozessor mit einer Vielzahl von Anschlusspunkten oder Pins sein. Der Codegenerator ist ausgelegt, serielle Codes eine vorbestimmte Anzahl zu wiederholen, oder sie permanent getaktet zu wiederholen, zumindest in einer Initialisierungs-Phase.

Die Steuerung CU jedes Fadenliefergeräts F1 bis F6 enthält einen nicht näher dargestellten Mikrocontroller oder -prozessor und zweckmäßig einen bidirektionalen I/O-Schaltkreis, wobei der I/O-Schaltkreis durch den Mikrocontroller der Steuerung CU umstellbar ist zwischen einem Lesestatus bzw. Lese- und Sendestatus und einem reinen Sendestatus, und zwar zweckmäßig unter Ansprechen des Mikrocontrollers auf den beim Adressieren von der Schnittstelle IF übertragenen seriellen Code, oder auf dessen Ausbleiben.

Ist das Fadenliefergerät für eine Kommunikation in dem Bussystem konzipiert, dann liest der Mikrocontroller den Informationsinhalt des seriellen Codes, akzeptiert die zugeteilte Knotenadresse und die Kommunikations-Protokoll-Auswahl, und wird dann der I/O-Schaltkreis im Lese- bzw. Lese- und Sendestatus (auch ggfs. zur Übertragung von Statussignalen in die Datenleitung DL) gehalten. Erhält der angeschlossene Mikrocontroller eines Fadeliefergeräts keine oder keine verständliche serielle Nachricht auf der Datenleitung DL, dann ist für das Fadenliefergerät ein Stand-Alone-BetriebsModus festgelegt. Der Mikrocontroller stellt den I/O-Schaltkreis in den Sendestatus um, um später über die Datenleitung DL Statussignale übertragen zu können.

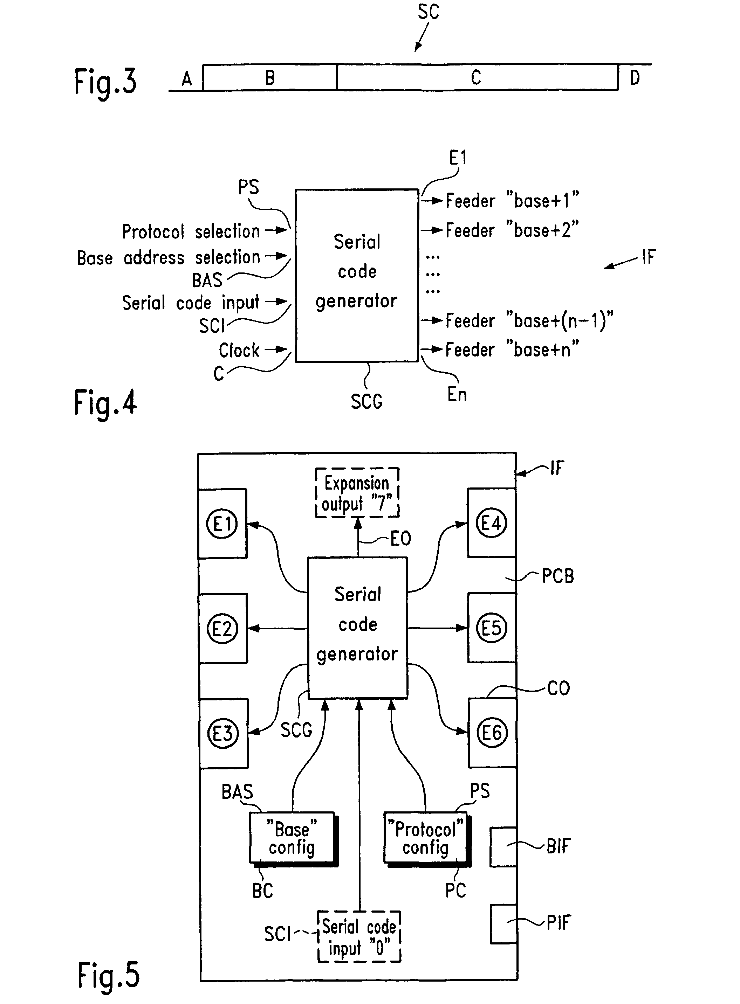

Fig. 3 verdeutlicht das Datenformat des seriellen Codes SC mit einem Startindikator A, der konventionell geformt wird durch wenigstens ein "low"-Bit für serielle Kommunikationssysteme. Der Start-Indikator zeigt an, dass ein serielles Wort folgt. Danach folgen ein binäres Datensegment B und, falls auch eine Kommunikations-Protokoll-Information übertragen wird, ein binäres Datensegment C. Jedes Datensegment B und C ist zusammengesetzt aus einer für ein spezielles System festgelegten Anzahl an Bits. Die Datensegmente enthalten die Information zur Knotenadresse und die Kommunikations-Protokollinformation. Am Ende des seriellen Codes SC wird als weiteres Segment ein Ende-Indikator D übertragen, der durch ein oder mehrere Bits gebildet wird, die im invertierten Status des Start-Bits übertragen werden. Der jeweils benutzte Software-Algorithmus ist Teil der Controller-Software-Auslegung.

Nachfolgend werden zwei unterschiedliche Initialisierungssequenzen erläutert.

Das Fadenliefergerät wird beim Einschalten des Versorgungsstroms in einen Initialisierungsstatus gebracht. Der bidirektionale I/O-Controller-Schaltkreis ist im Initialisierungsstatus zunächst nur Eingang. Während der Initialisierungsphase liest das Fadenliefergerät eingehende Pulse. Falls vor dem Ende des Initialisierungsvorgangs, z.B. bis zum Eintreffen des Datensegments D, kein gültiges Pulssignal detektiert wird, erkennt das Fadenliefergerät automatisch seinen Stand-Alone-Operationsmodus. Dies bedeutet, dass der bidirektionale I/O-Schaltkreis als ein Ausgang z.B. für Statussignale, gesetzt wird. Das Fadenliefergerät gibt später das jeweilige Statussignal über die Datenleitung DL entsprechend dem jeweiligen Status Fadenbruch, Überhitzung, Blockierung des Antriebsmotors, etc. ab.

Ein an einer Kommunikation teilnehmendes Fadenliefergerät tritt nach Einschalten in seinen Initialisierungsstatus. Während der Initialisierungsphase überwacht das Fadenliefergerät den Pulseingang. Sobald vor dem Datensegment D (Ende-Indikator) ein gültiges Pulssignal detektiert wird, d.h. eine korrekte Knotenadresse und ein gestütztes Kommunikations-Protokoll, nimmt das Fadenliefergerät automatisch seinen Kommunikations-Betriebsmodus ein. Im Kommunikations-Betriebsmodus ist der bidirektionale I/O-Schaltkreis als Eingang oder Ein- und Ausgang belassen. Sobald ein gültiges Signal ordnungsgemäß detektiert und akzeptiert worden ist, können weitere eingehende Signale entweder abgewiesen oder gelegentlich wieder ausgewertet werden. Um den Einfluss von Rauschen oder elektrischem Lärm und dgl. zu minimieren, wird der serielle Code mehrere Male gesampelt. Das Fadenliefergerät tritt nur dann in seinen Kommunikationsstatus, falls der konfigurierende serielle Code als stabil beurteilt worden ist, d.h. falls beispielsweise mehrere gleiche Samples festgestellt worden sind. Die Datenleitung DL kann später z.B. für Statussignale an die Textilmaschine benutzt werden.

In Fig. 4 ist die Auslegung des Codegenerators SCG angedeutet, und auch die Vorgangsweise zum Adressieren der Fadenliefergeräte, die an den Ausgängen E1 bis En angeschlossen sind. Eingangsseitig ist an den Codegenerator (ein Mikroprozessor oder eine Digital-Logikschaltung) ein Protokoll-Selektor PS angeschlossen, der das jeweilige Kommunikations-Protokoll definiert. Ferner ist ein Basisadress-Selektor BAS für die Basisadresse des Codes-Generators SCG angeschlossen, der die Basisadresse definiert, auf deren Basis der Code-Generator individuelle Knotenadressen generiert. Weiterhin ist ein Eingang SCI für einen seriellen Code angeschlossen, und schließlich ein Zeitgeber C zum internen Timen des Codegenerators . An zumindest einige der Ausgänge E1 bis En sind Fadenliefergeräte angeschlossen. Am Ausgang E1 für z.B. das erste Fadenliefergerät generiert der Codegenerator z.B. einen seriellen Code aus der Basisadresse plus der Adressennummer 1. Auf diese Weise wird an jedem Ausgang ein anderer serieller Code generiert, schließlich am Ausgang En der serielle Code aus der Basisadresse plus der Knotendadresse Nummer "n" Zusätzlich kann der serielle Code an jedem Ausgang mit einer Information für das ausgewählte Kommunikationsprotokoll generiert werden.

In Fig. 5 wird die Auslegung der Schnittstelle IF mit der Leiterplatte PCB gezeigt. Die Ausgänge E1 bis E6 sind beispielsweise als Konnektorteile CO ausgebildet und an den hier einzigen Code-Generator SCG angeschlossen. Eingangs des Code-Generators SCG sind der erwähnte Basisadressen-Selektor BAS in Form einer Basis-Konfiguration BC und der Protokoll-Selektor BS in Form einer Protokoll-Konfiguration PC angeschlossen. Optional kann ferner ein Input-SCI für einen seriellen Code "0" vorgesehen sein. Optional kann ferner ein Output-EO für einen seriellen Expansionscode "7" vorgesehen sein, für den Fall, dass an der Schnittstelle IF mehr als ein Code-Generator SCG benötigt werden sollte. Schließlich können an der Leiterplatte PCB eine Schnittstelle BIF für das Kommunikations-Bussystem, und/oder eine Schnittstelle PIF für die Stromversorgung angeordnet sein.

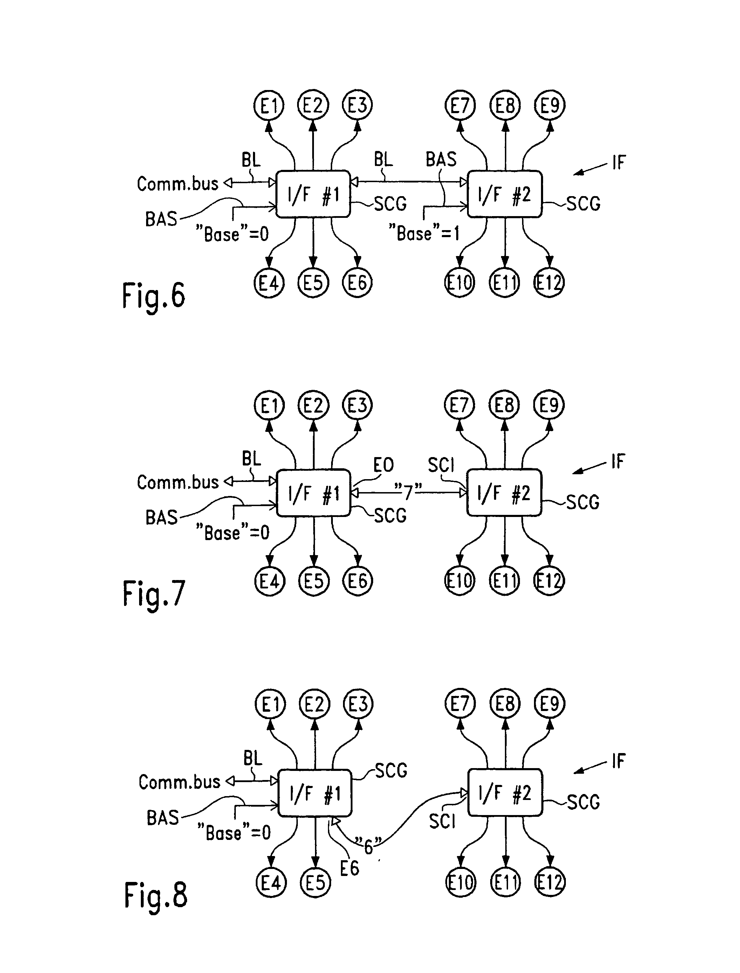

In Fig. 6 sind an der Schnittstelle IF mindestens zwei in Serie geschaltete Code-Generatoren SCG vorgesehen, um eine Vielzahl an Fadenliefergeräten anschließen zu können, und zwar an Ausgängen E1 bis E12. Die Code-Generatoren SCG sind über die Busleitung BL des Bussystems miteinander verbunden. Jeder Code-Generator SCG verfügt über einen eigenen Basisadressen-Selektor BAS, wobei der in Fig. 6 linke Generator die Basisadresse "0" hat, während der rechte die Basisadresse "1" erhält. Durch diese Verschaltung sind insgesamt zwölf Ausgänge E1 bis E 12für Fadenliefergeräte nutzbar, um diese zur Kommunikation und/oder zum Adressieren oder Setzen des Modus anzuschließen. Die Basisadresse für jeden Code-Generator wird gewählt durch seine interne Schaltungseinstellung. Für beide Code-Generatoren ist der interne Protokoll-Selektor in derselben Position gesetzt.

In Fig. 7 sind mindestens zwei Code-Generatoren SCG in Serie geschaltet, um insgesamt zwölf Ausgänge E1 bis E12 nutzen zu können. Der linke Code-Generator SCG hat den Basisadressenselektor BAS für die Basisadresse "0". Der rechte Code-Generator SCG ist mit einem Eingang SCI mit einem Ausgang EO verbunden, um den seriellen Expansionscode "7" abzunehmen. Die Basisadresse für den ersten Code-Generator SCG wird gewählt durch dessen interne Schaltungseinstellung. Der zweite Code-Generator SCG detektiert die Präsenz und die Basisadresse des linken Code-Generators und überschreibt seine interne Einstellung bezüglich der Basisadresse und der Protokollinformation mittels des seriellen Expansionscodes "7. Das Kommunikations-Bussystem wird durch ein nicht näher hervorgehobenes durchgehendes Buskabel vervollständigt.

In Fig. 8 sind ebenfalls mindestens zwei Code-Generatoren SCG in Serie geschaltet, wobei hier elf Ausgänge E1 bis E5 und E7 bis E12 nutzbar sind. Der Eingang SCI des rechten Code-Generators SCG ist an einen nicht zum Anschluss eines Fadenliefergerätes genutzten Ausgang des linken Code-Generators angeschlossen, beispielsweise den letzten Ausgang E6, um die im Ausgang E6 abgegebene Information zu lesen. Durch dies Verschaltung ist kein zusätzlicher Verbindungsstrang notwendig, allerdings auf Kosten des Verlustes des für kein Fadenliefergerät nutzbaren Ausgangs E6. Die Busleitung BL geht über die Code-Generatoren durch.

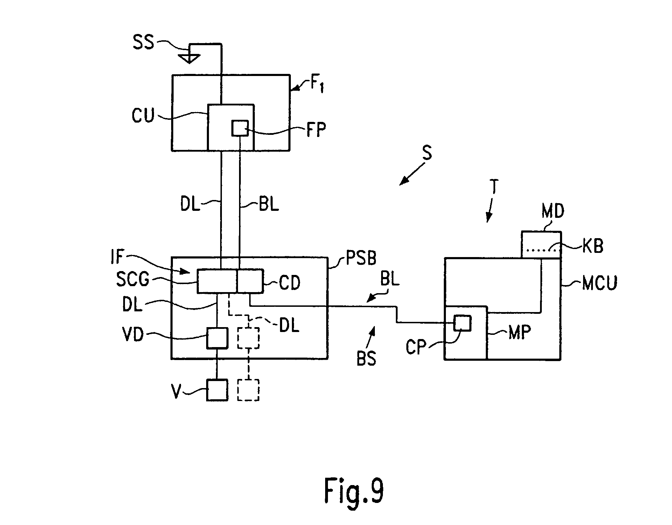

Bei dem in Fig. 9 schematisiert gezeigten fadenverarbeitenden System S aus der Textilmaschine T, beispielsweise einer Webmaschine, und wenigstens einem Fadenliefergerät F1, und einem Stromversorgungskasten PSB ist im oder beim Stromversorgungskasten PSB ein Funktionsglied VD vorgesehen, zu dem von der Schnittstelle IF und dem Code-Generator SCG (Prozessor oder Logikschaltung) eine Datenleitung DL fortgeführt ist. An das Funktionsglied VD ist beispielsweise eine Funktionskomponente wie ein Pneumatikventil V für Reinigungszwecke im fadenverarbeitenden System S angeschlossen. Es könnten nebeneinander mehrere Funktionsglieder VD vorgesehen sein (gestrichelt angedeutet). An das Funktionsglied VD sind über die Datenleitung DL und die Schnittstelle IF Funktionssignale übertragbar, und zwar im normalen Betrieb des fadenverarbeitenden Systems, d.h. zweckmäßigerweise nach Abschluss der Initialisierungsphase zum Adressieren und Auswählen des Kommunikationsprotokolls.

Die Textilmaschine ist über das Hauptbussystem BS und eine Busleitung BL (z.B. ein CAN-Bussystem) mit einem CAN-Verteiler CD im Stromversorgungskasten PSB verbunden, wobei ein Mikroprozessor MP der Hauptsteuerung MCU der Textilmaschine einen CAN-Prozessor CP enthält. Mit dem Mikroprozessor MP ist ein Textilmaschinen-Display MD und eine Tastatur KB verbunden. Vom Stromversorgungskasten führt ebenfalls eine Busleitung BL zu einem Liefergerät-Kommunikations-Prozessor FP der Fadenliefergerätsteuerung CU des Fadenliefergeräts F1. Ein Fadenliefergerät-Statussensor SS kann vorgesehen und an die Fadenliefergerät-Steuerung CU angeschlossen sein, der Statussignale generiert und weiterleitet. Die Fadenliefergerätsteuerung CU ist ferner über die Datenleitung DL an die Schnittstelle IF angeschlossen, und über die fortgeführte Datenleitung DL auch das Funktionsglied VD. Von dem Kommunikations-Verteiler CD ist eine Kommunikation mit dem Code-Generator SCG und/oder der Schnittstelle IF möglich, beispielsweise um entweder über die Fadenliefergerätsteuerung CU oder direkt auch Signale an das Funktionsglied VD zu geben.

Sobald nach der Initialisierungsphase das Fadenliefergerät F1 über eine serielle Nachricht seine Adresse erhalten hat, kennt das Fadenliefergerät seine Adresse oder seinen Modus bis zum Abschalten. Deshalb kann die Datenleitung, die zum Adressieren benutzt wurde, im Normalbetrieb des fadenverarbeitenden Systems für andere Zwecke benutzt werden. Das Adressieren kann durch einen Mikroprozessor (Code-generator SCG) im Stromversorgungskasten PSB vorgenommen werden. Dies resultiert in einem tatsächlichen seriellen Kommunikationssystem. Die Kommunikation kann entweder ein regelmäßiges Master/Sklaven-Kommunikationsprotokoll sein, oder auch ein LIN-Protokoll oder ein anderes, maßgeschneidertes Protokoll. Im einfachsten Fall funktioniert das System auch ohne Mikroprozessor, indem eine Pulskette durch logische Schaltkreise decodiert wird.

Falls Prozessoren vorgesehen sind, sind die Kosten für die zusätzliche Funktion des Pneumatikventils V extrem niedrig. Die zusätzliche Funktion wird im Regelfall über eine Steuervorrichtung ausgeführt, die mittlere bis niedrige Ansprüche hat, jedoch auf ein schnelles und präzises Timing angewiesen ist.

Bei der gezeigten Ausführungsform wird der Liefergerät-Mikroprozessor FB beispielsweise benutzt, um das Funktionsglied VD zu steuern, das in oder bei dem Stromversorgungskasten PSB platziert ist. Die Funktionskomponente kann das pneumatische Ventil V sein, das für Reinigungszwecke aktiviert und durch ein oder mehrere der Fadenliefergeräte gesteuert wird.

Über die Tastatur KB der Textilmaschine wird vom Bediener der jeweilige Reinigungsintervall und seine Zeitdauer gesetzt, und über das Maschinendisplay MD visualisiert. Über das Bussystem BS werden diese Funktionsparameter übertragen, wobei gegebenenfalls zum Timing und/oder zur Synchronisation auch der Drehwinkelwert der Hauptwelle der Textilmaschine mit berücksichtigt wird. Der Fadenliefergerät-Prozessor FP ist in der Lage, sowohl die CAN-Kommunikation als auch eine normale serielle Kommunikation zum Adressieren auszuführen. Von dem Fadenliefergerät-Prozessor FP werden die Kommandos an das Pneumatikventil V zum Funktionsglied VD, d.h. dem Ventilantrieb, zum Codegenerator SCG im Stromversorgungskasten PSB (ebenfalls einem Prozessor) gesandt. Dieser sendet dann ein Steuersignal (EIN und AUS) an das Funktionsglied VD. Statussignale vom Statussensor SS können entweder in der Steuervorrichtung CU in die Busleitung BL oder über die Datenleitung DL und den Codegenerator SCG zum Kommunikationsverteiler CD und von diesem an die Hauptsteuerung MCU übertragen werden.

Die Funktionsglieder VD könnten auch adressierbar sein, um als Knoten im Hauptbussystem BS zu fungieren. Auf diese Weise könnten mehrere, unterschiedliche oder gleiche Funktionsglieder präzise gesteuert werden.

## Patentansprüche

1. Vorrichtung zum Konfigurieren der Steuerung eines fadenverarbeitenden Systems (S), das eine Textilmaschine (T) und mehrere der Textilmaschine operativ zugeordneten Fadenliefergeräte (F1 bis F6) aufweist, insbesondere eine Webmaschine und Schussfaden-Liefergeräte, wobei die Textilmaschine eine Hauptsteuerung (MCU) und jedes Liefergerät eine Liefergerät-Steuerung (CU) aufweist, mit einem Kommunikations-Bussystem (BS), an das zumindest die Liefergeräte über Knoten anschließbar sind, und mit einer Adressiervorrichtung zum Adressieren der Fadenliefergeräte in dem Bussystem, **dadurch gekennzeichnet, dass** für die Fadenliefergeräte (F1 bis F6) eine gemeinsame Schnittstelle (IF) mit getrennten Ausgängen (E1 bis E12) vorgesehen ist, an die die Fadenliefergeräte (F1 bis F6) mit eigenen, einzelnen Datenleitungen (DL) angeschlossen sind und die mindestens einen Adressier-Code-Generator (SCG) in Form eines Prozessors oder einer Digital-Logikschaltung aufweist, mit dem an den Ausgängen gepulste serielle Codes (SC) generierbar sind, die pro Ausgang wenigstens eine individuelle Knoten-Adressen-Information (B) enthalten.

2. Vorrichtung nach Anspruch 1, **dadurch gekennzeichnet, dass** mit dem Adressier-Code-Generator (SCG) an jedem Ausgang (E1 bis E12) ein gepulster serieller Code (SC) generierbar ist, der zusätzlich zu der individuellen Knoten-Adressen-Information (B) eine Kommunikations-Protokoll-Information (C) für das angeschlossene Fadenliefergerät enthält.

3. Vorrichtung nach Anspruch 1, **dadurch gekennzeichnet, dass** die Liefergeräte-Steuerung (CU) einen Mikrocontroller (FP) und einen an die Datenleitung (DL) angeschlossenen, bidirektionalen I/O-Schaltkreis aufweist, der unter Ansprechen des Mikrocontrollers auf den Informationsinhalt und/9der das Ausbleiben des seriellen Codes vom Mikrocontroller in einem Lesestatus haltbar oder in einen Sendestatus umstellbar ist.

4. Vorrichtung nach Anspruch 3, **dadurch gekennzeichnet, dass** der I/O-Schaltkreis nach Erhalt und Verifikation der Knoten-Adressen-Information (B) und einer Kommunikations-Protokoll-Information im Lesestatus oder Lese/Sendestatus haltbar ist, und dass der I/O-Schaltkreis bei Ausbleiben einer nicht verifizierbaren Adressen-Information und/oder Kommunikations-Protokoll-Information oder einer seriellen Information in den Sendestatus z.B. für Liefergerät-Statussignale umstellbar ist, vorzugsweise unter Ansprechen des Mikrocontrollers auf Start- und Ende-Indikatoren (A, D) des zwischen den Indikatoren keine für das Fadenliefergerät gültige Information enthaltenden seriellen Codes (SC).

5. Vorrichtung nach Anspruch 1, **dadurch gekennzeichnet, dass** die Schnittstelle (IF) mit dem Code-Generator (SCG) in einem von der Textilmaschine (T) baulich getrennten Stromversorgungskasten (PSB) der Liefergeräte (F1 bis F6) angeordnet ist, und, vorzugsweise, Fadenkanälen der Webmaschine fest zugeordnete SchussfadenLiefergerät-Ausgänge (E1 bis E12) besitzt.

6. Vorrichtung nach Anspruch 1, **dadurch gekennzeichnet, dass** die Schnittstelle (IF) wenigstens eine Kommunikations-Schnittstellen-Leiterplatte (PCB) eines ersten Typs aufweist, die kommunikationsfähig an das mit der Hauptsteuerung (MCU) verbundene Kommunikations-Bussystem (BS) angeschlossen ist.

7. Vorrichtung nach Anspruch 1, **dadurch gekennzeichnet, dass** die Schnittstelle (IF) wenigstens eine Stand-Alone-Kommunikations-Schnittstellen-Leiterplatte (PCB) eines zweiten Typs aufweist, die an das von der Textilmaschine (T) separierte Kommunikations-Bussystem (BS) und an die Textilmaschine (T) angeschlossen ist und eine Funktionalität besitzt, wie sie normalerweise von einer Textilmaschine selbst bereitgestellt wird.

8. Vorrichtung nach Anspruch 1, **dadurch gekennzeichnet, dass** die Schnittstelle (IF) wenigstens eine Stand-Alone-Schnittstellen-Leiterplatte (PCB) eines dritten Typs aufweist, die über die Datenleitung (DL) und eine Signalleitung (SL) z.B. für Liefergerät-Statussignale mit der Hauptsteuerung (MCU) der Webmaschine verbunden ist.

9. Vorrichtung nach wenigstens einem der Ansprüche 6 bis 8, **dadurch gekennzeichnet, dass** die Schnittstelle (IF) eine Universal-Leiterplatte (PCB) aufweist, die wahlweise als der erste, der zweite oder der dritte Leiterplatten-Typ konfigurierbar ist.

10. Vorrichtung nach wenigstens einem der vorhergehenden Ansprüche, **dadurch gekennzeichnet, dass** die jeweilige Datenleitung (DL) von der Schnittstelle (IF) zu einer Signalleitung (SL) oder wenigstens einem, vorzugsweise adressierbaren, Funktionsglied (VD) fortgeführt ist, und dass über die Datenleitung (DL) nach Abschluss einer Initialisierungsphase über die Datenleitung (DL) und eine einzige Signalleitung (SL) Statussignale an die Textilmaschine (T) und/oder über die Datenleitung (DL) Funktionssignale an das Funktionsglied (VD) zumindest weitgehend in Echtzeit übertragbar sind.

11. Vorrichtung nach Anspruch 1, **dadurch gekennzeichnet, dass** der Code-Generator (SCG) einen System-Zeitgeber (C), einen die jeweilige Kommunikations-Protokoll-Information definierenden Protokollselektor (PS), vorzugsweise in Forme eines DIP-Schalters oder mehrerer Jumper-Schalter oder eines mehreren in Serie geschalteten Code-Generatoren gemeinsamen Selektor-Schalters, und einen eine Basis-Adresse des Code-Generators definierenden Basis-Adress-Selektor (BAS) aufweist, vorzugsweise in Form eines DIP-Schalters oder mehrerer Jumper-Schalter, und dass mit dem Code-Generator (SCG) die individuelle Knoten-Adress-Informationen unter Nutzen seiner definierten Basis-Adresse generierbar ist.

12. Vorrichtung nach Anspruch 11, **dadurch gekennzeichnet, dass** die Schnittstelle (IF) mehrere in Serie geschaltete Code-Generatoren (SCG) mit jeweils einem eigenen Basis-Adress-Selektor (BAS) aufweist.

13. Vorrichtung nach Anspruch 11, **dadurch gekennzeichnet, dass** von mehreren in Reihe geschalteten Code-Generatoren ein stromabliegender Generator an einen als Basis-Adress-Selektor genutzten Ausgang (E6), beispielsweise den letzten, des stromaufliegenden Code-Generators angeschlossen ist.

14. Vorrichtung nach wenigstens einem der vorhergehenden Ansprüche, **dadurch gekennzeichnet, dass** in der Schnittstelle (IF) zusätzlich wenigstens eine Kommunikations-Schnittstelle (BIF) und wenigstens eine Stromversorgungs-Schnittstelle (PIF), vorgesehen sind.

15. Vorrichtung nach Anspruch 11, **dadurch gekennzeichnet, dass** die Ausgänge (E1 bis E12) als Liefergerät-Anschluss-Konnektoren (CO) für jeweils ein Verbindungskabel (L) ausgebildet sind, in welchem die Datenleitung (DL) durch eine Adressier-Ader gebildet ist.

16. Vorrichtung nach Anspruch 11, **dadurch gekennzeichnet, dass** der Code-Generator (SCG) zusätzlich einen Eingang (SCI) für einen seriellen Code und/oder einen Ausgang (EO) für einen seriellen Expansionscode aufweist.

17. Vorrichtung nach Anspruch 16, **dadurch gekennzeichnet, dass** bei in Serie geschalteten Code-Generatoren (SCG) jeder stromabliegende Code-Generator mit seinem Code-Eingang (SCI) an den seriellen Expansionscode-Ausgang (EO) des stromaufliegenden Code-Generators angeschlossen ist zum Ableiten der Basis-Adresse des stromaufliegenden Code-Generators und zum Überschreiben der internen, gesetzten Kommunikations-Protokoll- und/oder Basis-Adress-Information des stromabliegenden Code-Generators mittels eines übertragenen seriellen Expansionscodes.

18. Vorrichtung nach Anspruch 16, **dadurch gekennzeichnet, dass** bei in Serie geschalteten Code-Generatoren (SCG) der Code-Eingang (SCI) des stromabliegenden Code-Generators an einen nicht an ein Fadenliefergerät angeschlossenen Ausgang (E1 bis E12) des stromaufliegenden Code-Generators angeschlossen ist zum Ablesen der Basisadresse des stromaufliegenden Code-Generators und zum Überschreiben der internen Kommunikations-Protokoll- und Basisadressen-Informationseinstellung des stromabliegenden Code-Generators mittels der aus dem ausgewählten Ausgang des stromaufliegenden Code-Generators übertragenen individuellen Informationen.

19. Vorrichtung nach Anspruch 1, **dadurch gekennzeichnet, dass** der serielle Code (SC) ein in mehrere Datensegmente (A, B, C, D) unterteiltes Datenformat aufweist, mit einem Start-Indikator (A) für ein serielles Wort, vorzugsweise wenigstens einem "low"-Start-Bit, wenigstens einem binären Datensegment (B, C) zusammengesetzt aus einer Bit-Vielzahl, vorzugsweise einem Datensegment (B) mit der jeweiligen Knoten-Adressen-Information und einem Datensegment (C) mit der jeweiligen Kommunikations-Protokoll-Information für den Knoten, und einem Ende-Indikator (D) für das serielle Wort, vorzugsweise einem oder mehreren Bits im invertierten Status des Start-Bits.

20. Verfahren zum Konfigurieren der Steuerung eines fadenverarbeitenden Systems, das eine Textilmaschine (T) und mehrere der Textilmaschine operativ zugeordnete Fadenliefergeräte (F1 bis F6) aufweist, insbesondere eine Webmaschine mit Schussfadenliefergeräten, wobei die Textilmaschine (T) eine Hauptsteuerung (MCU) und jedes Fadenliefergerät eine Liefergeräte-Steuerung (CU) aufweist, mit einem Kommunikations-Bussystem (BS), an das zumindest die Fadenliefergeräte in einem Knoten anschließbar sind, und mit einer Adressiervorrichtung zum Adressieren jedes Fadenliefergeräts innerhalb des Bussystems, **dadurch gekennzeichnet, dass** innerhalb einer Initialisierungsphase, die durch Einschalten des fadenverarbeitenden Systems (S) oder der Fadenliefergeräte (F1 bis F6) eingeleitet wird, mit wenigstens einem separaten Adressier-Code-Generator (SCG) an einer allen Fadenliefergeräten gemeinsamen Schnittstelle (IF) individuelle gepulste serielle Knoten-Adressen-Codes (SC) generiert, die zum Adressieren und Setzen in einen Kommunikationsstatus über getrennte einzelne Datenleitungen (DL) zwischen der Schnittstelle (IF) und jedem Fadenliefergerät (F1 bis F6) übertragen werden.

21. Verfahren nach Anspruch 20, **dadurch gekennzeichnet, dass** ein kombinierter serieller Code (SC) generiert wird, der die individuelle Knoten-Adressen-Information (B) und eine Kommunikations-Protokoll-Information (C) umfasst, und dass der serielle Code im jeweiligen Fadenliefergerät (F1 bis F6) mehrfach gesampelt und der Kommunikations-Status erst nach Detektion mehrerer untereinander gleicher Samples des Codes gesetzt wird.

## Claims

1. Device for configuring the control of a yarn processing system (S) comprising a textile machine (T) and several yarn feeding units (F1) operatively associated to the textile machine, particularly a weaving machine and weft yarn feeding devices, the textile machine having a main control unit (MCU) and each yarn feeding unit having a yarn feeding unit control unit (CU), a communication bus system (BS) to which at least yarn feeding units are connected at nodes, and an addressing device for addressing the yarn feeding units in the bus system, **characterised in that** a common interface (IF) having separated outputs (E1 to E12) is provided for the yarn feeding units (F1 to F6) to which outputs the yarn feeding units (F1 to F6) are connected via single data lines (DL), the common interface comprising at least one addressing code generator (SCG) in the form of a processor or of a digital logic circuitry by which addressing code generator pulsed serial codes (SC) are generated at the outputs each of which code contains at least one individual node address information (B) for each output.

2. Device as in claim 1, **characterised in that** the pulsed serial code (SC) generated by the addressing code generator (SCG) at each output (E1 to E12) contains, in addition to the individual node address information (B), a communication protocol information (C) for the yarn feeding unit connected to the output.

3. Device as in claim 1, **characterised in that** the yarn feeding unit control unit (CU) comprises a microcontroller (FP) and a bi-directional I/O circuitry connected to the data line (DL) which I/O circuitry is maintained in a reading status or is switched into a sending status upon response of the microcontroller to the information content of the serial code and/or to an absent serial code.

4. Device as in claim 3, **characterised in that** the I/O circuitry is held in the reading status or the reading status/sending status after receipt and verification of the node address information (B) and of a communication protocol information (C), and that the I/O circuitry is switched into the sending status, e.g. for sending out yarn feeding unit status signals, if no verifiable address information and/or communication protocol information is transmitted, preferably by response of the microcontroller to start and end indicators (A, D) of the serial code (SC) which otherwise does not contain any valid information for the yarn feeding unit in between the indicators.

5. Device as in claim 1, **characterised in that** the interface (IF) is provided together with the code generator (SCG) within a power supply box (PSB) of the yarn feeding units (F1 to F6) which power supply box is structurally separated from the textile machine (T), and that, preferably, the interface (IF) has weft yarn feeding device outputs (E1 to E12) firmly associated to yarn channels of the weaving machine.

6. Device as in claim 1, **characterised in that** the interface (IF) comprises at least one communication interface circuit board (PCB) of a first type which is connected for communication to the communication bus system (BS) which is turn is connected to the main control unit (MCU).

7. Device as in claim 1, **characterised in that** the interface (IF) comprises at least one stand alone communication interface circuit board (PCB) of a second type which is connected to the textile machine (T) and to the communication bus system (BS) which is separated from the textile machine (T), and that the circuit board (PCB) is equipped with a functionality as normally provided by a textile machine itself.

8. Device as in claim 1, **characterised in that** the interface (IF) comprises at least one stand alone interface circuit board (PCB) of a third type which is connected to the main control unit (MCU) of the weaving machine via the data line (DL) and a signal line (SL) e.g. for sending yarn feeding unit status signals.

9. Device as in at least one of claims 6 to 8, **characterised in that** the interface (IF) comprises a universal circuit board (PCB) selectively configured as the first, the second or the third circuit board type.

10. Device as in at least one of the preceding claims, **characterised in that** the respective data line (DL) is extended from the interface (IF) to a signal line (SL) or to at least one, preferably addressable, functional member (VD), and that status signals can be transmitted to the textile machine (T) after the termination of an initialisation phase via the data line (DL) and the single signal line (SL) and/or that functional signals can be transmitted via the data line (DL) to the functional member (VD) at least almost in real time.

11. Device as in claim 1, **characterised in that** the code generator (SCG) comprises a system clock (C), a protocol selector (PS) for defining the respective communication protocol information, preferably in the form of a DIP switch or of several jumper switches or of a common selector switch for several code generators switched in series, and a basis address selector (BAS) for defining a basis address of the code generator, preferably in the form of a DIP switch or of several jumper switches, and that the code generator (SCG) is programmed to genera to an individual node address information by using the defined basis address of the code generator.

12. Device as in claim 11, **characterised in that** the interface (IF) comprises several code generators (SCG) switched in series, each code generator having its own basis address selector (BAS).

13. Device as in claim 11, **characterised in that** a generator located downstream of more than one code generators switched in series is connected to an output (E6) which then is used as a basis address selector, e.g. is connected to the last output of the respective code generator located upstream.

14. Device as in at least one of the preceding claims, **characterised in that** additionally at least one communication interface (BIF) and at least one power supply interface (PIF) are provided at the interface (IF).

15. Device as in claim 11, **characterised in that** the output (E1 to E12) are designed as feeding unit connecting connectors (CO) for respective connection cables (L), in the respective connection cable (L) containing the data line (DL) as an addressing conductor.

16. Device as in.claim 11, **characterised in that** the code generator (SCG) additionally comprises an input (SCI) for a serial code and/or an output (EO) for a serial expansion code.

17. Device as in claim 16, **characterised in that** each code generator located downstream of several code generators (SCG) switched in series is connected with its code input (SCI) to the serial expansion code output (EO) of the code generator located upstream for deriving the basis address of the code generator located upstream and for overwriting by a transmitted serial expansion code the internal preset communication protocol information and/or basis address information of the code generator located downstream.

18. Device as in claim 16, **characterised in that** in case of code generators (SCG) switched in series the code input (SCI) of the code generator located downstream is connected to such an output (E1 to E12) of the code generator located upstream, which output is not connected to a yarn feeding unit, for reading the basis address of the code generator located upstream and for overwriting by transmitted individual information from the selected output of the code generator located upstream the internal communication protocol information setting and basis address information setting of the code generator located downstream.

19. Device as in claim 1, **characterised in that** the serial code (SC) comprises a data format sub-divided into several data segments (A, B, C, D), including a start indicator (A) for a serial word, preferably at least one "low" start bit, at least one binary data segment (B, C) of a plurality of bits, preferably a data segment (B) containing the respective node address information and a data segment (C) containing the respective communication protocol information for the node, and an end indicator (D) of the serial word, preferably one or several bits in the inverted status of the start bit.

20. Method for configuring the control of a yarn processing system comprising a textile machine (T) and several yarn feeding units (F1 to F6) operatively associated to the textile machine, namely particularly a weaving machine and weft yarn feeding devices, the textile machine (T) having a main control unit (MCU) and each yarn feeding unit having a feeding unit control unit (CU), further a communication bus system (BS) to which at least the yarn feeding units are connected at respective nodes and an addressing device for addressing ach yarn feeding unit within the bus system, **characterised in that** within a system initialisation phase started by switching on the yarn processing system (S) or the yarn feeding units (F1 to F6), individual pulsed serial node address codes (SC) are generated by at least one separate addressing code generator (SCG) at an interface (IF) which is common for all yarn feeding units, and that the node address codes (CS) are transmitted via separated single data lines (DL) between the interface (IF) and each yarn feeding unit (F1 to F6) for addressing and for setting a communication status.

21. Method as in claim 20, **characterised in that** a combined serial code (SC) is generated which comprises the individual node address information (B) and a communication protocol information (C), and that the combined serial code is sampled several times by the respective yarn feeding unit (F1 to F6) for setting the communication status first after the detection of several equal samples of the serial code.

## Revendications

1. Dispositif de configuration de la commande d'un système (S) de traitement de fils qui présente une machine textile (T) et plusieurs appareils de fourniture de fils (F1 à F6) associés fonctionnellement à la machine textile, en particulier un métier à tisser et des appareils de fourniture de fils de trame, la machine textile présentant une commande principale (MCU) et chaque appareil de fourniture une commande (CU) d'appareil de fourniture, un système de bus de communication (BS) auquel au moins les appareils de fourniture peuvent être raccordés par des noeuds, et un dispositif d'adressage qui adresse les appareils de fourniture de fils dans le système de bus, **caractérisé en ce qu'**une interface commune (IF) dotée d'entrées séparées (E1 à E12) est prévu pour les appareils (F1 à F6) de fourniture de fils, les appareils (F1 à F6) de fourniture de fils étant raccordés par des conducteurs de données individuels (DL) et l'interface présentant au moins un générateur de codes d'adresse (SCG) qui présente la forme d'un processeur ou d'un circuit logique numérique par lequel des séries de pulsations codées (SC) qui contiennent pour chaque sortie au moins une information individuelle de code d'adresse (B) peuvent être créés sur les sorties.

2. Dispositif selon la revendication 1, **caractérisé en ce que** le générateur de codes d'adresse (SCG) peut créer à chaque sortie (E1 à E12) une série d'impulsions codées (SC) qui, en plus de l'information individuelle d'adresse de noeud (B) contient une information (C) de protocole de communication pour l'appareil de fourniture de fils qui y est raccordé.

3. Dispositif selon la revendication 1, **caractérisé en ce que** la commande (CU) des appareils de fourniture présente un microcontrôleur (FP) et un circuit d'entrée/sortie bidirectionnel raccordé au conducteur de données (DL) qui, lorsque le microcontrôleur réagit à l'information contenue et/ou lorsque le code série n'est pas présent, peut être maintenu par le microcontrôleur dans un état de lecture ou être passé dans un état d'émission.

4. Dispositif selon la revendication 3, **caractérisé en ce que** le circuit d'entrée/sortie peut être maintenu à l'état de lecture et/ou à l'état de lecture/émission après avoir reçu et vérifié l'information d'adresse de noeud (B) et une information de protocole de communication, et **en ce que** lorsque l'information d'adresse et/ou l'information de protocole de communication ne peuvent être vérifiées ou dans le cas d'une information série, le circuit d'entrée/sortie peut être passé à l'état d'émission par exemple pour les signaux d'état des appareils de fourniture, de préférence lorsque le microcontrôleur réagit à des indicateurs de début et de fin (A, D) du code série qui, entre les indicateurs, ne contient pas d'information valide pour l'appareil de fourniture de fils.

5. Dispositif selon la revendication 1, **caractérisé en ce que** l'interface (IF) est disposée avec le générateur de codes (SCG) dans un caisson (PSB) d'alimentation en courant des appareils de livraison (F1 à F6) qui est monté séparément par rapport à la machine textile (T) et possède de préférence des canaux de fils des sorties (E1 à E12) de l'appareil de fourniture de fils de trame disposées en position fixe par rapport au métier à tisser.

6. Dispositif selon la revendication 1, **caractérisé en ce que** l'interface (IF) présente au moins une carte d'interface de communication (PCB) d'un premier type qui est raccordé de manière à pouvoir communiquer avec le système de bus de communication (BS) relié à la commande principale (MCU).

7. Dispositif selon la revendication 1, **caractérisé en ce que** l'interface (IF) présente au moins une carte d'interface de communication autonome (PCB) d'un deuxième type qui est raccordée au système de bus de communication séparé de la machine textile (T) et à la machine textile (T) et qui possède une fonction normalement remplie par la machine textile elle-même.

8. Dispositif selon la revendication 1, **caractérisé en ce que** l'interface (IF) présente au moins une carte d'interface autonome (PCB) d'un troisième type qui est raccordée à la commande principale (MCU) du métier à tisser par l'intermédiaire du conducteur de données (DL) et d'un conducteur de signaux (SL) prévu par exemple pour les signaux d'état des appareils de fourniture.

9. Dispositif selon au moins l'une des revendications 6 à 8, **caractérisé en ce que** l'interface (IF) présente une carte universelle (PCB) qui peut être configurée sélectivement comme carte du premier, du deuxième ou du troisième type.

10. Dispositif selon au moins l'une des revendications précédentes, **caractérisé en ce que** chaque conducteur de données (DL) est raccordé entre l'interface (IF) et un conducteur de signaux (SL) ou au moins à un organe fonctionnel (VD), de préférence adressable, et **en ce que** lorsqu'une phase d'initialisation est terminée, des signaux d'état peuvent être transférés à la machine textile (T) au moins largement en temps réel par le conducteur de données (DL) et/ou des signaux fonctionnels peuvent être transférés à l'organe fonctionnel (VD) au moins largement en temps réel.

11. Dispositif selon la revendication 1, **caractérisé en ce que** le générateur de codes (SCG) présente un sélecteur de protocole (PS) qui définit chaque information de protocole de communication, et qui présente de préférence la forme d'un commutateur DIP, de plusieurs commutateurs à pontage ou d'un commutateur de sélection commun à plusieurs générateurs de codes raccordés en série, et un sélecteur d'adresses de base (BAS) qui définit l'adresse de base du générateur de codes et qui présente de préférence la forme d'un commutateur DIP ou de plusieurs commutateurs à pontage, et **en ce que** les informations individuelles d'adressé de noeud peuvent être créées par la générateur de codes (SCG) par recours à son adresse de base définie.

12. Dispositif selon la revendication 11, **caractérisé en ce que** l'interface (IF) présente plusieurs générateurs de codes (SCG) raccordés en série qui présentent chacun leur propre sélecteur d'adresses de base (BAS).

13. Dispositif selon la revendication 11, **caractérisé en ce que** parmi plusieurs générateurs de codes raccordés en série, un générateur situé en aval est raccordé à une sortie (E6) utilisée comme sélecteur d'adresses de base, par exemple la dernière sortie du générateur de codes situé en amont.

14. Dispositif selon au moins l'une des revendications précédentes, **caractérisé en ce que** dans l'interface (IF) sont de plus prévues au moins une interface de communication (BIF) et au moins une interface d'alimentation en courant (PIF).

15. Dispositif selon la revendication 11, **caractérisé en ce que** chaque sortie (E1 à E12) est configurée comme connecteur (CO) de raccordement d'un appareil de fourniture pour un câble de liaison (L) dans lequel le conducteur de données (DL) est formé par un fil d'adressage.

16. Dispositif selon la revendication 11, **caractérisé en ce que** le générateur de codes (SCG) présente de plus une entrée (SCI) pour un code série et/ou une sortie (EO) pour un code d'expansion série.

17. Dispositif selon la revendication 16, **caractérisé en ce que** lorsque les générateurs de codes (SCG) sont raccordés en série, chaque générateur de codes situé en aval est raccordé par son entrée de code (SCI) à la sortie série des codes d'expansion (EO) du générateur de codes situé en amont pour déduire l'adresse de base du générateur de codes situé en amont et pour remplacer l'information de- protocole de communication et/ou l'information d'adresse de base interne du générateur de codes situé en aval au moyen d'un code d'expansion série qu'il transmet.

18. Dispositif selon la revendication 16, **caractérisé en ce que** lorsque les générateurs de codes (SCG) sont raccordés en série, l'entrée des codes (SCI) du générateur de codes situé en aval est raccordée à une sortie (E1 à E12) du générateur de codes situé en amont qui n'est pas raccordée à un appareil de fourniture de fils, pour lire l'adresse de base du générateur de codes situé en amont et pour remplacer le réglage de l'information interne de protocole de communication et de l'information interne d'adresses de base du générateur de codes situé en aval au moyen des informations individuelles transmises en provenance de la sortie sélectionnée du générateur de codes situé en amont.

19. Dispositif selon la revendication 1, **caractérisé en ce que** le code série (SC) présente un format de données divisé en plusieurs segments de données (A, B, C, D), avec un indicateur de départ (A) pour un mot série, de préférence au moins un bit de démarrage "bas", au moins un segment binaire de données (B, C) constitué de l'assemblage de plusieurs bits, au moins un segment de données (B) qui contient l'information d'adresse du noeud concerné, un segment de données (C) qui contient l'information de protocole de communication pour le noeud concerné et un indicateur de fin (D) du mot série, de préférence constitué d'un ou de plusieurs bits inverses des bits de départ.

20. Procédé de configuration de la commande d'un système de traitement de fils qui présente une machine textile (T) et plusieurs appareils (F1 à F6) de fourniture de fils fonctionnellement associés à la machine textile, en particulier un métier à tisser doté d'appareils de fourniture de fils de trame, la machine textile (T) présentant une commande principale (MCU) et chaque appareil de fourniture de fils une commande (CU) d'appareil de fourniture, avec un système de bus de communication (BS) auquel au moins les appareils de fourniture de fils peuvent être raccordés en un noeud et un dispositif d'adressage qui adresse chaque appareil de fourniture de fils situé à l'intérieur du système de bus, **caractérisé en ce que** pendant une phase d'initialisation qui est lancée par le branchement du système (S) de traitement de fils ou des appareils (F1 à F6) de fourniture de fils, au moins un générateur séparé de codes d'adressage (SCG) crée sur une interface (IF) commune à tous les appareils de fourniture de fils des séries d'impulsions codées (SC) d'adresse des noeuds individuels qui sont transmises par des conducteurs de données (DL) individuels séparés entre l'interface (IF) et chaque appareil (F1 à F6) de fourniture de fils pour l'adressage et l'établissement d'un état de communication.

21. Procédé selon la revendication 20, **caractérisé en ce qu'**un code série combiné (SC) est créé et comprend l'information individuelle d'adresse de noeud (B) et une information (C) de protocole de communication, et **en ce que** le code série est échantillonné plusieurs fois dans chaque appareil de fourniture de fils (F1 à F6) et que le statut de communication n'est établi qu'après détection de plusieurs échantillons, tous identiques, du code.
